# EUROPÄISCHE PATENTSCHRIFT

(11) **EP 2 193 398 B1**
(45) Veröffentlichungstag und Bekanntmachung des Hinweises auf die Patenterteilung: **23.04.2014**
(21) Anmeldenummer: 08802221.5
(22) Anmeldetag: 16.09.2008
(51) Int. Cl.: G02B 21/00, G02B 21/24, G02B 21/36

(54) **VERFAHREN ZUR MIKROSKOPISCHEN DREIDIMENSIONALEN ABBILDUNG EINER PROBE**
METHOD FOR THE MICROSCOPIC THREE-DIMENSIONAL REPRODUCTION OF A SAMPLE
PROCÉDÉ DE REPRÉSENTATION TRIDIMENSIONNELLE MICROSCOPIQUE D'UN ÉCHANTILLON

(30) Priorität: 26.09.2007 DE 102007045897
(43) Veröffentlichungstag der Anmeldung: 09.06.2010
(73) Patentinhaber: Carl Zeiss Microscopy GmbH, 07745 Jena (DE)
(72) Erfinder: LIPPERT, Helmut, 07745 Jena (DE); RADT, Benno, 07743 Jena (DE); KEMPE, Michael, 07751 Jena (DE); DIETRICH, Christian, 07743 Jena (DE)
(74) Vertreter: Hampe, Holger
(86) Internationale Anmeldenummer: PCT/EP2008/007686
(87) Internationale Veröffentlichungsnummer: WO 2009/043472

(56) Entgegenhaltungen:
- EP-A- 1 491 936
- WO-A-98/45745
- WO-A-99/42885
- WO-A-2004/053558
- WO-A-2006/008300
- WO-A-2006/111965
- DE-A1- 3 739 223
- SWOGER, J. ET AL: "Multi-view image fusion improves resolution in three-dimensional microscopy" OPTICS EXPRESS, Bd. 15, Nr. 13, 13. Juni 2007 (2007-06-13), Seiten 8029-8042, XP002508396
- HUISKEN, J.; STAINER, D. Y. R.: "Even fluorescence excitation by multidirectional selective plane illumination microscopy (mSPIM)" OPTICS LETTERS, Bd. 32, Nr. 17, 1. September 2007 (2007-09-01), Seiten 2608-2610, XP002508397

## Beschreibung

Die Erfindung bezieht sich auf ein Verfahren zur Ausrichtung des zu einem Lichtblatt geformten Beleuchtungslichtes relativ zur Fokusebene eines Mikroskopobjektivs bei der dreidimensionalen Abbildung einer Probe nach der Methode der Selective-Plane-Illumination-Microscopy (SPIM).

Es ist bekannt, mikroskopische dreidimensionale Abbildungen beispielsweise nach dem Prinzip der Laser-Scanning-Microscopy (LSM) zu gewinnen. Dabei wird eine mit Laserlicht bestrahlte Lochblende in die Probe abgebildet und beleuchtet diese mit der Intensitätsverteilung eines Airyscheibchens. Das Bild dieses beleuchteten Probenpunktes entsteht auf einer in Lage und Größe zur Beleuchtungsblende konjugierten Meßblende. Soll dabei ein ausgedehntes Probenfeld erfaßt werden, wird dieses durch optisches Scanning abgetastet. Die dabei gewonnenen Bildinformationen werden elektronisch gespeichert und aus den gespeicherten Daten wird die dreidimensionale Abbildung rekonstruiert. Bei der Laser-Scanning-Microscopy (LSM) hängt die Bildqualität im Wesentlichen von der Lage und Öffnungsgröße der Messblende relativ zur Lage der Lochblende ab, d.h. die Lochblende sollte so justiert sein, daß sie mit hoher Genauigkeit auf die Messblende abgebildet wird.

Ein weiteres, erst in jüngerer Zeit bekannt gewordenes Prinzip zur Gewinnung mikroskopischer dreidimensionaler Abbildungen wird als Selective-Plane-Illumination-Microscopy oder Single-Plane-Illumination-Microscopy (SPIM) bezeichnet.

Im Unterschied zur konfokalen Laser-Scanning-Microscopy (LSM) beruht die SPIM-Technologie auf der Weitfeld-Mikroskopie und ermöglicht die dreidimensionale bildliche Darstellung einer Probe auf der Grundlage von optischen Schnitten durch einzelne Ebenen der Probe.

Die Vorteile der SPIM-Technologie bestehen unter anderem in der größeren Geschwindigkeit, mit der die Erfassung der Bildinformationen erfolgt, der geringeren Gefahr des Ausbleichens von biologischen Proben sowie in der Möglichkeit, die laterale Auflösung der Abbildung unabhängig von der Tiefenauflösung einstellen zu können.

Prinzipiell werden bei der SPIM-Technologie Fluorophore, die an sich in der Probe enthalten sind oder eigens zur Kontrastierung in die Probe eingebracht werden, mit Laserlicht angeregt, wobei die Laserstrahlung zu einem sogenannten Lichtblatt geformt ist. Mit dem Lichtblatt wird jeweils eine ausgewählte Ebene in der Tiefe der Probe beleuchtet, und mit einer Abbildungsoptik werden Bildinformationen aus dieser Probenebene in Form eines optischen Schnittes gewonnen. Der Anregungsstrahlengang ist dabei vom Detektionsstrahlengang separiert.

Das Lichtblatt hat eine senkrecht zur optische Achse des Mikroskopobjektivs in den Koordinaten X und Y ausgedehnte, an das zu untersuchende Probenfeld angepaßte Länge und Breite und eine sich in Richtung der optischen Achse des Mikroskopobjektivs erstreckende Dicke, die im Bereich von wenigen µm liegt.

Ein Beispiel für die SPIM-Methode ist aus WO 2004/053558 A1 bekannt. Hierbei wird die zu untersuchende Probe, beispielsweise ein Medaka-Embryo, in ein wässriges Gel eingebettet, in dem es eine gewisse Zeit weiterlebt. Das Lichtblatt kann entweder direkt z.B. durch eine Zylinderoptik oder als Quasi-Lichtblatt durch den Scan eines linienförmigen Strahls über den Objektbereich generiert werden.

Da bei der SPIM-Methode der Anregungsstrahlengang anders als im LSM vom Detektionsstrahlengang prinzipiell entkoppelt ist, ist ein zusätzlicher Justageschritt erforderlich ist, der sich auf die präzise Ausrichtung des Lichtblattes auf die Fokusebene des verwendeten Detektionsobjektivs bezieht. Nach dem Stand der Technik wird hierzu in der Regel ein Spiegel verwendet, der anstelle der Probe in den Probenraum eingebracht wird, und der das Lichtblatt zum Detektionsobjektiv hin reflektiert. Mit Hilfe von Referenzstrukturen auf dem Spiegel (z.B. in Form von Kratzern) und anhand der Dicke und Position des auf dem Spiegel sichtbaren vom Lichtblatt erzeugten Lichtstreifens läßt sich eine Justage vornehmen.

Problematisch hierbei ist, daß zum einen nicht direkt an der Probe gemessen wird und zum anderen bei der Laserwellenlänge justiert wird, die nicht der eigentlich interessierenden von der Probe kommenden Emissionswellenlänge entspricht, wodurch etwaige chromatische Längsfehler z.B. des Detektionsobjektivs nicht berücksichtigt werden.

Das Justieren des Lichtblattes direkt anhand der Probe ist wünschenswert, allerdings ist ein hierfür geeignetes Verfahren im Stand der Technik nicht bekannt.

Ein weiteres Problem beim SPIM-Verfahren wird bei der Rekonstruktion von dreidimensionalen Abbildungen einer Probe aus Bildinformationen, die aus verschiedenen Detektionsrichtungen erfaßt werden sollen, offenbar. Die dabei anfallende und zu verarbeitende Datenmenge ist so umfangreich, daß effiziente Algorithmen erforderlich sind, um die aus den verschiedenen Detektionsrichtungen gewonnenen Bildstapel mittels Strukturvergleich durch Translations-, Rotations- und Deformationsoperationen in angemessener Zeit zur Überlappung zu bringen und zu fusionieren. Dies gilt umso mehr, wenn der Strukturvergleich auf durch die Probe selbst gegebenen Strukturen basiert, die je nach Detektionsrichtung bzw. Drehwinkel unterschiedlich stark ausgeprägt sein können, da z.B. Abschattungseffekte eine Rolle spielen. Die Registrierung, d.h. die Erfassung der Bildinformationen sowie der notwendigen Operationsvorschriften, wird dann sehr aufwendig und zeitraubend, und meist sind kommerziell erhältliche Rechner zur Bewältigung der dazu erforderlichen Rechenkapazität nicht geeignet.

In einem Artikel von J. Swoger et al., Optics Express Vol. 15 No. 13 (2007), S. 8029 - 8042 wird ein Verfahren zur dreidimensionalen Abbildung einer Probe nach der Methode der Selective-Plane-Illumination-Mikroskopie beschrieben, bei dem der Schwerpunkt auf der Erzeugung eines räumlich aufgelösten Bildes einer Probe mit möglichst hoher Genauigkeit liegt. Dazu wird ein spezielles Bildaufnahme- und Bildverarbeitungsverfahren vorgeschlagen, in das insbesondere die anhand von Referenzstrukturen bestimmten Punktantworten (auch bezeichnet als Punktspreizfunktion, *point spread function,* PSF) eingehen. Diese Referenzobjekte werden vorab unter den gleichen Bedingungen ausschließlich zur Erzeugung der PSF verwendet.

In der EP 1 491 936 A2 wird ein Verfahren beschrieben, bei dem zur Erhöhung der Genauigkeit der Fokussierung auf ein zu vermessendes Objekt eine Gitterstruktur projiziert wird um die optimale Schärfeeinstellung sicherzustellen. Ähnliche Verfahren werden auch in der DE 37 39 223 A1 und in der WO 98/45745 A1 beschrieben.

Davon ausgehend liegt der Erfindung die Aufgabe zugrunde, Verfahrensschritte anzugeben, die bei der dreidimensionalen Abbildung einer Probe eine erhöhte Abbildungsqualität gewährleisten.

Die Aufgabe der Erfindung wird mit einem Verfahren nach Anspruch 1 gelöst.

In einer Ausgestaltung der Erfindung, die sich auf die Ausrichtung des zu einem Lichtblatt geformten Beleuchtungslichtes relativ zur Fokusebene eines Mikroskopobjektiv bei Anwendung der SPIM-Methode bezieht, ist vorgesehen, daß
- mindestens ein aus einer fluoreszierenden Substanz bestehendes oder eine fluoreszierende Substanz aufweisendes Referenzobjekt, das eine als Referenzstruktur nutzbare Struktur aufweist, neben oder in der Probe positioniert wird, oder - das Beleuchtungslicht mit einer Referenzstruktur in Form einer ungleichmäßigen Intensitätsverteilung beaufschlagt wird, indem des Lichtblatt durch die Bewegung eines Scannerspfegels erzeugt wird und zeitlich moduliert wird,
- aus mindestens einer vorgegebenen Detektionsrichtung
- Bilder von der Referenzstruktur des Beleuchtungslichts, von der Referenzstruktur des Referenzobjektes oder von der Referenzstruktur der Probe aufgenommen und bezüglich der Schärfe ihrer Abbildung bewertet werden, dann
- das Lichtblatt in dieser Detektionsrichtung in die Position verschoben wird, bei der die schärfste Abbildung der Referenzstruktur in eine Beobachtungsebene erzielt wird, und/oder
- das Lichtblatt so ausgerichtet wird, dass die Referenzstruktur über das gesamte Bildfeld homogen scharf abgebildet wird.

Mit der Verschiebung des Lichtblatt in der Detektionsrichtung wird dieses in die Fokusebene des Mikroskopobjektivs gebracht, während mit der Ausrichtung des Lichtblattes anhand der Homogenität der Abbildungsschärfe über das gesamte Bildfeld hinweg verkippungen des Lichtblattes gegenüber der Fokusebene ausgeglichen werden.

Die wesentlichen Vorteile der Verwendung von Referenzstrukturen, die sowohl von Referenzobjekten stammen als auch dem Beleuchtungslicht aufgeprägte sein können, bestehen zum einen darin, daß eine einfache in-situ-Justage des Lichtblattes im Falle der Anwendung der Selective-Plane-Illumination-Microscopy (SPIM) möglich ist. Zum anderen wird mit der Verwendung von Referenzobjekten der rechnerische Aufwand bei der Rekonstruktion der dreidimensionalen Abbildung der Probe gegenüber dem Stand der Technik erheblich reduziert.

In einer weiteren Ausgestaltung kann die Ausrichtung des Lichtblattes automatisch vorgenommen werden, indem das Lichtblatt durch den Probenraum in z-Richtung durchgefahren und dabei ein Bildstapel aufgenommen wird, eine Auswertung dieses Stapels hinsichtlich des Kontrastes der Einzelbilder vorgenommen wird, anhand des Kontrastes die optimale Lichtblattposition relativ zur Fokusebene des Mikroskopobjektivs bestimmt wird, und vermittels einer Stelleinrichtung das Lichtblatt in diese Position gebracht wird.

Das erfindungsgemäße Verfahren soll nachfolgend anhand von mehreren Anwendungsbeispielen erläutert werden. Die zugehörige Zeichnung zeigt in
- Fig.1: eine Darstellung des Prinzips der mikroskopischen Aufnahme einer dreidimensionalen Abbildung einer Probe nach der Methode der Single-Plane-Illumination-Microscopy (SPIM),
- Fig.2: ein erstes Anwendungsbeispiel des erfindungsgemäßen Verfahrens, bei dem eine Probe in Form eines mit Enhanced Green Fluorescent Protein (EGFP) eingefärbten und damit bei Anregung grün fluoreszierenden Zebrafischembryos in ein Agarose-Gel eingebettet ist und fluoreszierenden Partikel als Referenzstruktur verwendet werden,
- Fig.3: ein zweites Anwendungsbeispiel, des nicht gegenstand der Erfindung ist, mit einer vermittels eines Gitters dem Lichtblatt aufgeprägten Referenzstruktur,
- Fig.4: ein drittes Anwendungsbeispiel, bei dem die Referenzstruktur in Form eines strukturierten Quasi-Lichtblattes durch die Bewegung eines Scannerspiegels und eine zeitliche Strahlmodulation erzeugt wird,
- Fig.5: ein viertes Anwendungsbeispiel zur Erläuterung der Lichtblattjustage anhand eines Lichtblattes, dem eine Referenzstruktur aufgeprägt ist.

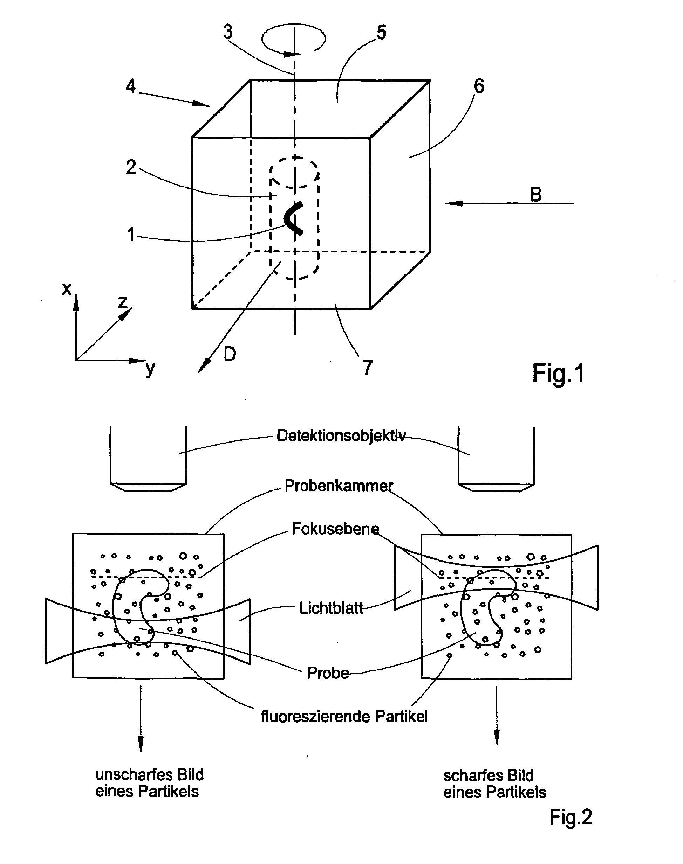

Wie aus Fig.1 ersichtlich, ist eine Probe 1 in ein zu einem Kreiszylinder 2 geformtes Gel eingebettet. Der Kreiszylinder 2 befindet sich in einer Probenkammer 4 und ist innerhalb der Probenkammer 4 gemeinsam mit der Probe 1 um eine Drehachse 3 drehbar als auch translatorisch in den Koordinatenrichtungen X,Y,Z verschiebbar gelagert.

Die Probe 1 sei ein dreidimensionales Objekt, beispielsweise eine biologische Substanz. Der Kreiszylinder 2 mit der eingeschlossenen Probe 1, die mit einem Immersionsmedium gefüllt ist, beispielsweise mit Wasser oder PBS (Phosphate Buffered Saline). Die Probenkammer 4 ist an ihrer Oberseite 5 offen, so daß von hier das Gel mit der eingeschlossenen Probe 1 und auch das Immersionsmedium eingebracht werden können.

Ist als Immersionsmedium Wasser vorgesehen, so kann das Gel aus einem Gemisch von ca. 98% Wasser und 2% Agarose bestehen. Bei Verwendung anderer Immersionsmedien sind andere Materialien zum Einbetten der Probe 1 denkbar; so kommen beispielsweise auch mit einer Flüssigkeit gefüllte Glaszylinder in Betracht. Die Wände der Probenkammer 4 können aus Glas oder einem anderen, im Hinblick auf den Brechungsindex geeigneten transparenten Material gefertigt sein.

Zur Beleuchtung der Probe ist eine Laserstrahlungsquelle vorgesehen (zeichnerisch nicht dargestellt), die ein Lichtbündel beispielsweise der Wellenlänge 488 nm abstrahlt. Es ist von Vorteil, wenn die Strahlungsintensität im Querschnitt dieses Lichtbündels mit geeigneten optischen Mitteln zunächst homogenisiert wird, bevor es in seinem weiteren Verlauf zu dem sogenannten Lichtblatt geformt wird.

Die Formung des Lichtblattes erfolgt entweder direkt z.B. durch eine Zylinderoptik oder als Quasi-Lichtblatt durch den Scan eines linienförmigen Strahls über den Objektbereich.

Das zu dem Lichtblatt geformte Beleuchtungslicht tritt in der mit Pfeil B gekennzeichneten Richtung durch die Probenkammerwand 6 hindurch in das Immersionsmedium und muß so positioniert werden, daß es dort die Fokusebene eines (zeichnerisch nicht dargestellten) Mikroskopobjektivs beleuchtet.

Diese Ausrichtung des Lichtblattes relativ zur Fokusebene ist nach dem Stand der Technik schwierig, wenn sich die Probe bereits im Probenraum befindet, denn dann ist eine sogenannte in-situ-Justage erforderlich. Dabei kann nicht davon ausgegangen werden, daß die Ebene der Probe, welche mit der Fokusebene des Objektivs nach einer groben Vorpositionierung überlappt, kontrastreiche Strukturen enthält, anhand derer sich die Überlappung zwischen Lichtblatt und Fokusebene beim einem Durchfahren des Lichtblattes in z-Richtung zweifelsfrei festlegen läßt.

Im Gegensatz zum Stand der Technik, bei dem eine solche Justage mittels Spiegel erfolgt, ist nun erfindungsgemäß vorgesehen, die Justage anhand einer bekannten Referenzstruktur vorzunehmen, die neben der Probe in den Probenraum in indirekter oder direkter Form eingebracht wird.

Bei Verwendung einer direkt mittels Referenzobjekten erzeugten Referenzstruktur muß sichergestellt sein, daß sich zumindest ein Teil derselben bereits in der Fokusebene des Detektionsobjektivs befindet, bevor die Justage des Lichtblattes vorgenommen wird. Dies gelingt entweder durch Verwendung einer Vielzahl von Referenzobjekten, die im wesentlichen gleichmäßig über den Probenraum verteilt sind, oder durch eine gesonderte Einstellung mit Hilfe eines anderen Kontrastverfahrens, wie z.B. bei der herkömmlichen Durchlicht-Mikroskopie.

Bei Verwendung einer indirekten Referenzstruktur, bei welcher das Licht des Lichtblattes strukturiert ist, ist ein derartiger verfahrensschritt nicht erforderlich.

Ist danach die Probe relativ zur Fokusebene und damit auch zum justierten Lichtblatt in gewünschter Weise positioniert, wird eine Ebene der Probe 1, nämlich die Ebene, die sich in der Fokusebene befindet, beleuchtet.

Dabei tritt ein von der Probe 1 reflektierter oder gestreuter Anteil des Beleuchtungslichtes als Detektionslicht in der mit Pfeil D gekennzeichneten Detektionsrichtung durch die Probenkammerwand 7 hindurch aus der Probenkammer 4 aus und wird von dem Mikroskopobjektiv aufgesammelt.

Im Stand der Technik werden mit dem Mikroskop, dessen funktioneller Teil das Mikroskopobjektiv ist, aus der mit Pfeil D gekennzeichneten Detektionsrichtung zunächst Bildinformationen aus der sich aktuell in der Fokusebene befindenden Ebene der Probe 1 erfaßt. Danach wird die Probe 1 in Richtung der Koordinate Z wiederholt um einen vorgegebenen Betrag oder auch kontinuierlich verschoben. Dabei werden mittels eines ortsauflösenden optoelektronischen Wandlers, bevorzugt einer CCD-Kamera, Bildinformationen aus den sich jeweils in der beleuchteten Fokusebene befindenden Ebenen der Probe 1 erfaßt und digitalisiert und im Weiteren in Zuordnung zu ihren Raumkoordinaten X,Y,Z, elektronisch gespeichert. Man erhält schon auf dieser Stufe eine 3D-Abbildung der Probe, deren Qualität in der Regel allerdings aufgrund von probenbedingten Abschattungseffekten und Aberrationen noch stark limitiert ist. Zudem ist die Auflösung in der Regel inhomogen, da sie lateral durch die numerische Apertur des Detektionsobjektivs und axial durch die Lichtblattdicke bestimmt ist.

Die Detektionsrichtung wird nun mehrfach verändert, indem die Probe 1 um die Drehachse 3 gedreht wird, und aus jeder geänderten Detektionsrichtung werden wiederum Bildinformationen aus unterschiedlichen Ebenen in der Tiefe der Probe 1 erfaßt und ortsaufgelöst gespeichert.

Aus den aus allen vorgegebenen Detektionsrichtungen gewonnenen und gespeicherten Bildinformationen wird ein von Bildartefakten, wie Abschattungen durch nicht transparente Probenbestandteilen und Aberrationen, weitgehend freies dreidimensionales Bild der Probe 1 elektronisch durch Registrierung und Fusion rekonstruiert. Gleichzeitig wird in diesem Verfahren eine weitgehend homogene Auflösung erzielt.

Nachteilig wäre hier immer noch der verhältnismäßig hohe Aufwand an Rechenkapazität, der daraus resultiert, daß sich die Bildartefakte je nach Detektionsrichtung in unterschiedlichen Bereichen der Probe auswirken, was die auf Strukturvergleich basierende Registrierung erschwert. Zudem ist die Menge der Bildinformationen von der Probe äußerst umfangreich, und daher eine unmittelbare Verarbeitung nur bedingt möglich.

So wird zur Gewinnung der Bildinformationen beispielsweise mit einer kommerziellen CCD-Kamera für jede vorgegebene Detektionsrichtung ein Bildstapel aus 1000 x 1000 x 1000 Bild-Pixeln in den Koordinaten X,Y,Z bei 16 bit aufgenommen. Die dabei zu erfassende und zu verarbeitende Datenmenge beträgt bereits 16 GB.

Wird die Detektion aus nur vier verschiedenen Richtungen durchgeführt, wobei die Probe 1 jeweils um 90° um die Drehachse 3 gedreht wird, ist eine Datenmenge von 64 GB zu erfassen und zu verarbeiten. Sind hierbei noch die oben beschriebenen Schwierigkeiten bei der Auswertung zu umgehen, so wird der Gesamtaufwand so groß, daß herkömmliche kommerziell erhältliche Rechnersystemen überfordert sind.

Diesbezüglich ist vorgesehen, aus jeder der vorgegebenen Detektionsrichtungen zusätzlich zu den Bildinformationen von der Probe 1 auch Bildinformationen eines oder mehrerer neben der Probe 1 oder in der Probe 1 positionierter Referenzobjekte zu erfassen und gemeinsam mit den Bildinformationen von der Probe 1 ortsaufgelöst zu speichern, und bei der Rekonstruktion des dreidimensionalen Bildes der Probe 1 die Raumkoordinaten X,Y,Z der von dem Referenzobjekt bzw. den Referenzobjekten gewonnenen Bildinformationen zugrunde zu legen.

Konkret wird hierzu die Registrierung ausschließlich anhand der in wesentlich geringerer Menge anfallenden Bildinformationen der Referenzstruktur vorgenommen und daraus eine Transformationsvorschrift in Form einer Matrix ermittelt, die dann auf die Bildinformationen der eigentlichen Probe angewandt wird. Die Fusionierung zur 3D-Darstellung findet mit den nach Anwendung der Transformation registrierten Bildstapeln der Probenstruktur statt.

In einem ersten Anwendungsbeispiel des erfindungsgemäßen Verfahrens, das nachfolgend erläutert wird, wird die Probe in Form eines mit Enhanced Green Fluorescent Protein (EGFP) eingefärbten und damit bei Anregung grün fluoreszierenden Zebrafischembryos in ein Agarose-Gel eingebettet. Von diesem Zebrafischembryo soll eine dreidimensionale Abbildung nach der oben beschriebenen Methode der Selective-Plane-Illumination-Mikroskopy (SPIM) gewonnen werden.

Erfindungsgemäß ist vorgesehen, in das Agarose-Gel neben dem Zebrafischembryo rot fluoreszierende Partikel, beispielsweise kleine mit BODIPY-630-Farbstoff markierte Polystyrol-Kügelchen einzubetten. Diese Partikel sind in einer so hohen Konzentration vorhanden, daß sie quasi homogen über den Probenraum innerhalb der Probenkammer verteilt sind.

Das Lichtblatt kann anhand dieser Partikel in einfacher weise justiert werden, was anhand Fig.2 verdeutlicht wird. Hierzu wird das Lichtblatt in z-Richtung über die Probe bewegt und bestrahlt neben der Probe auch die fluoreszierenden Partikel.

Solange das Lichtblatt außerhalb der Fokusebene in die Probenkammer einstrahlt, ergibt sich ein schwaches unscharfes Bild der dort befindlichen Partikel, wie dies in Fig.2 auf der linken Bildseite dargestellt ist. Das Gel, das die Probe umschließt, ist hier der Übersichtlichkeit halber nicht eingezeichnet.

Das ändert sich, sobald das Lichtblatt in der Fokusebene einstrahlt, wie in Fig.2 auf der rechten Bildseite dargestellt. Die Partikel werden scharf abgebildet, und das Lichtblatt ist an dieser Stelle justiert.

Vorteilhaft kann vorgesehen sein, die Justageschritte automatisiert ablaufen zu lassen. Hierzu wird in einfachster Ausführungsform das Lichtblatt durch den Probenraum in z-Richtung durchgefahren und dabei ein Bildstapel aufgenommen. Es erfolgt dann eine Auswertung dieses Stapels beispielsweise hinsichtlich des Kontrastes der Einzelbilder, so daß schnell die optimale Lichtblattposition bestimmt werden kann.

Nach der Justage des Lichtblattes erfolgt die eigentliche Bildaufnahme. Dazu werden zunächst aus einer vorgegebenen Detektionsrichtung Bildinformationen aus mehreren unterschiedlich tief in dem Zebrafischembryo gelegenen Ebenen und auch Bildinformationen der Partikel erfaßt und ortsaufgelöst gespeichert. Danach wird die Detektionsrichtung mehrfach verändert, und aus jeder mit den Änderungen vorgegebenen Detektionsrichtungen werden wiederum Bildinformationen aus unterschiedlich tief gelegenen Ebenen des Zebrafischembryos und der Partikel erfaßt und ortsaufgelöst gespeichert.

Die für die Verarbeitung der so erfaßten Bildinformationen der Probe zu einer 3D-Darstellung der Probe erforderliche Rechenkapazität kann nun verringert werden, wie nachfolgend erläutert wird.

Werden beispielsweise 100 der Partikel für jede Detektionsrichtung mikroskopisch erfaßt, so reduzieren sich die Daten im idealen Fall einer Schwarz-/Weiß-Darstellung dieser Partikel auf 100 bit pro Detektionsrichtung. Für eine derartige Datenreduktion muß zunächst im Gesamtbild, welches im allgemeinen Fall zunächst sowohl die Bildinformationen der Probe als auch der Partikel enthält, eine Segmentierung vorgenommen werden, d.h. die Partikelstrukturen werden von den Probenstrukturen durch Filterung separiert, die Koordinaten der Partikelpositionen werden erfaßt und im Anschluß als Schwarz/Weiß-Muster hinterlegt.

Handelt es sich um eine im grünen Spektralbereich fluoreszierende Probe, so kann die Filterung hardwaretechnisch durch spektrale Separation erfolgen. Die resultierende verhältnismäßig geringe Datenmenge kann von kommerziellen Rechnern mühelos in Echtzeit verarbeitet werden, zumal die Partikelemission von probenbedingten Bildartefakten weitgehend unberührt sein sollte.

Die Partikel bilden 100 Fixpunkte, anhand derer Verschiebungen, Rotationen und Deformation der Probensubstanz von Detektionsrichtung zu Detektionsrichtung berechnet und dann auch rechnerisch korrigiert werden.

Vorteilhaft wird die Größe der Partikel so gewählt, daß diese nicht streuend und auch nicht als Kugellinsen in der Probe, in diesem Fall dem Zebrafischembryo, wirken und daher nicht zu starken Artefakten führen können. Bevorzugt haben die Partikel eine Größe von 100 nm bis 1 µm.

Zur Gewinnung der Bildstapel aus beispielsweise vier Detektionsrichtungen wird das Gel mit dem eingeschlossenen Zebrafischembryo und den eingeschlossenen Partikeln in der Probenkammer zunächst in einer ersten Blickrichtung des Mikroskopobjektivs auf das Zebrafischembryo und die Partikel plaziert, und es werden Bildinformationen eines ersten Bildstapels aufgenommen. Dann wird das Gel mit dem Zebrafischembryo und den Partikeln um 90° um die Drehachse 3 gedreht, und es werden Bildinformationen eines zweiten Bildstapels aufgenommen. Danach wird in analoger Weise noch zwei Mal um jeweils 90° gedreht und dabei ein dritter und vierter Bildstapel aufgenommen.

Zusammengefaßt werden dabei im wesentlichen folgende Verfahrensschritte ausgeführt:
- Justage, vorteilhaft automatisiert ablaufende Justage des Lichtblattes anhand der Partikel, indem das Lichtblatt in z-Richtung über den Probenraum gefahren und die dabei gewonnenen Bilder im Hinblick auf maximale Schärfe ausgewertet werden,
- Scharfstellen der Probe in einer Region of Interest (RIO) durch Verschieben in Z-Richtung,
- Auswahl eines Detektionsfilters, mit dem die Partikel sich mit ausreichend gutem Signal vom Untergrund abheben,
- Erfassen eines ersten Bildstapels aus der ersten Detektionsrichtung (0°), wobei der Bildstapel einmal für die Fluoreszenzfarbe "grün" und gleich anschließend ein zweites Mal für die Fluoreszenzfarbe "rot" aufgenommen wird, so daß Bildinformationen der Probe (grün) und Bildinformationen der Partikel (rot) erfaßt werden, oder gleichzeitige Aufnahme beider Farbkanäle "rot" und "grün" durch ein zur spektralen Auftrennung geeignetes Detektionssystem,
- Drehen der Probe um jeweils 90° zur Ausrichtung in drei weitere Detektionsrichtungen, die demzufolge Winkel von 90°, 180° und 270° mit der ersten Detektionsrichtung einschließen; Aufnehmen jeweils eines weiteren Bildstapels für die Fluoreszenzfarbe "grün" und für die Fluoreszenzfarbe "rot" aus jeder dieser Detektionsrichtungen, wobei die Bildinformationen in den Bildstapeln überlappen.

Im Ergebnis liegen für die Fluoreszenzfarbe "grün" und die Fluoreszenzfarbe "rot" jeweils vier Bildstapel vor aus Blickrichtungen auf die Probe, die jeweils um einen Winkel von 90° zueinander versetzt sind.

Aus den damit vorliegenden Bildinformationen wird die dreidimensionale Abbildung der Probe beispielsweise rekonstruiert, indem für die Fluoreszenzfarbe "rot" zum Zwecke der Datenreduktion eine Segmentierung so vorgenommen wird, daß ein Schwarz/Weiß-Muster in 3D-Ansicht entsteht. Anschließend erfolgt für die mit der Fluoreszenzfarbe "rot" gewonnenen Bildstapel der Schritt der Registrierung, d.h. es werden für jeden Bildstapel die notwendigen Transformationsoperatoren bestimmt, beispielsweise in Form einer Matrix für Translation, Rotation und Deformation, die dazu geeignet sind, die Bildinformationen jedes Bildstapels mit den Bildinformationen der anderen Bildstapel zum Überlappen zu bringen.

Die so ermittelten Transformationsoperatoren werden dann auf den grünen Kanal, d.h. auf die mit der Fluoreszenzfarbe "grün" gewonnenen Bildstapel angewendet, wobei nun registrierte Bildstapel mit Bildinformationen von der Probe entstehen. Letztere werden durch einen Fusionsschritt vereinigt, so daß eine einzige hochwertige 3D-Abbildung der Probe entsteht.

In einem zweiten Anwendungsbeispiel des erfindungsgemäßen Verfahrens wird anstelle der fluoreszierenden Partikel beispielsweise ein angefärbter Polyester- oder Polystyrolfaden neben der Probe, beispielsweise wiederum einem Zebrafischembryo, in ein Agarose-Gel eingebettet.

Für die Lichtblattjustage muß sichergestellt sein, daß sich ein Teil des Fadens in der Fokusebene des Detektionsobjektivs befindet. Hierzu kann zunächst der Faden gemeinsam mit der Probe solange unter Auswertung eines einfachen Durchlichtkontrastes in z-Richtung bewegt werden, bis er zumindest teilweise in der Fokusebene liegt, was sich anhand der Schärfe seiner Abbildung beurteilen läßt. Das Lichtblatt wird im Anschluss derart ausgerichtet, dass sich in der Fokusebene befindliche Teil des Fadens auch im SPIM-Modus scharf abgebildet wird.

Im Anschluß werden in den bereits beschriebenen Verfahrensschritten aus unterschiedlichen Detektionsrichtungen Bildstapel so aufgenommen, daß immer auch mindestens ein gleicher Abschnitt der Faser in den Bildstapeln vorkommt. Da die Menge der Bildinformationen vom Faden ebenso wie die Menge der Bildinformationen von den Partikeln im ersten Anwendungsbeispiel wesentlich geringer ist als die Menge der Bildinformationen von der Probe, wird hiermit ebenfalls eine wesentliche Reduzierung des zu verarbeitenden Datenvolumens erzielt.

Auch hier wird, wie anhand des ersten Anwendungsbeispiels bereits erläutert, die dreidimensionale Abbildung der Probe rekonstruiert, indem zunächst für jede Detektionsrichtung der gleiche Abschnitt des Fadens von der Probenstruktur separiert wird, was z.B. durch einen einfachen Beschnitt des Bildes gelingen kann. Für letzteres ist es vorteilhaft, wenn der Faden beispielsweise in y-Richtung knapp unterhalb der Probe positioniert ist. Hiernach findet die Registrierung für die Fadenbilder statt, und es wird eine Transformationsvorschrift in Form einer Matrix ermittelt, die dann auf die eigentlich interessierenden Probeninformationen angewandt wird. Hiernach erfolgt die Fusion, durch die eine einzige hochwertige 3D-Abbildung der Probe entsteht.

In einem dritten Anwendungsbeispiel wird als Referenzobjekt eine Nadel in ein Agarose-Gel eingebettet. Vorteilhafterweise wird die Nadelspitze so eingebracht, daß sie sich exakt in der Drehachse 3 (vgl. Fig.1) befindet.

Von Vorteil ist es ebenfalls, wenn die Probe zudem in unmittelbarer Umgebung der Nadelspitze positioniert wird, was z.B. durch Aufstecken erreicht werden kann.

Für die Lichtblattjustage muß sichergestellt sein, daß sich die Nadelspitze in der Fokusebene des Detektionsobjektivs befindet. Hierzu kann sie gemeinsam mit der Probe unter Auswertung eines einfachen Durchlichtkontrasts in z-Richtung bewegt werden, bis sie scharf abgebildet wird.

Die aufzunehmende Region of Interest (RIO) wird so gewählt, daß die Nadelspitze in den Bildstapeln vorkommt.

Befindet sich die Nadelspitze in der Drehachse 3 und ist die Probe in deren unmittelbarer Umgebung platziert, so ist zunächst die Bildaufnahme stark vereinfacht, denn die Probe rückt bei einer Rotationsbewegung in der Regel nicht aus dem Bildfeld heraus. Zudem ist klar, daß sich die absolute Position der Nadelspitze bei der Rotationsbewegung nicht verändert hat und daher einen Fixpunkt darstellt. Werden also die Positionen der Probenstrukturen für jeden Bildstapel relativ zur Nadelspitze bestimmt, so ist für die Registrierung lediglich eine reine Rotationbewegung erforderlich, denn die Nadelspitze unterliegt keiner Translationsbewegung. Die Registrations-Algorithmen laufen daher sehr viel effizienter ab.

Ein weiterer Vorteil der Verwendung einer Nadelspitze liegt darin, daß sie sich zur Kalibrierung der für eine automatische Justage des Lichtblattes vorhandenen Antriebe verwenden läßt.

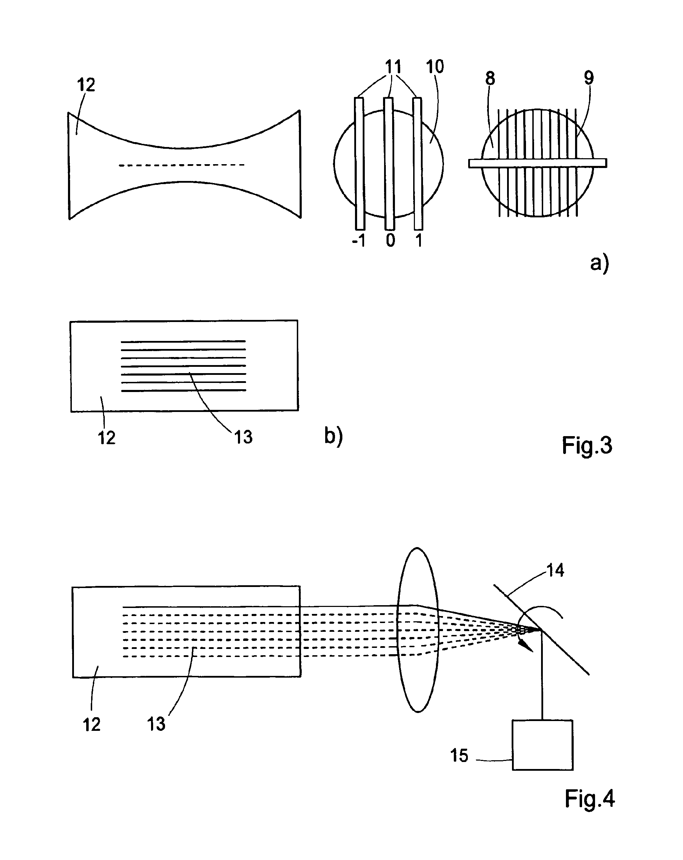

In einem vierten Anwendungsbeispiel kommt eine indirekt erzeugte Referenzstruktur in Form eines strukturierten Lichtblattes zum Einsatz. Die Referenzstruktur kann beispielsweise erzeugt werden wie in Fig.3 gezeigt.

Dazu wird in eine zum Objektraum konjugierte Ebene 8 ein Gitter 9 platziert. In der Pupillenebene 10 des Beleuchtungsobjektivs ergeben sich dann verschiedene Gitterordnungen 11, und im Probenraum entsteht wiederum ein Bild des Gitters.

Dieses Gitter bewirkt eine über die Breite eines Lichtblattes 12 modulierte Intensitätsverteilung. In Fig.3a ist die Intensitätsverteilung des Lichtblattes 12 in einer Seitenansicht auf die Objektebene eines (nicht gezeichneten) Detektionsobjektivs dargestellt, wobei das Lichtblatt 12 senkrecht zur Zeichenebene ausgerichtet ist und die Referenzstruktur 13 (vgl. Fig.3b) im Bereich der Schärfentiefe des Beleuchtungsobjektivs liegt. Die in Fig.3a in das Lichtblatt 12 eingezeichnete gestrichelte Linie stellt symbolisch den Bereich der Schärfentiefe dar.

Aus Fig.3b ist die die Referenzstruktur 13 bewirkende Intensitätsverteilung des Lichtblattes 12 in einer Draufsicht auf die Objektebene ersichtlich.

Eine vergleichbare Intensitätsverteilung entsteht beispielsweise auch durch eine Anordnung bzw. Verfahrensweise wie in Fig.4 gezeigt.

Das Lichtblatt 12 wird hier als Quasi-Lichtblatt durch die Bewegung eines Scannerspiegels 14 in einer Pupillenebene des Beleuchtungsstrahlengangs erzeugt. Ein im wesentlichen linienförmiger Strahl wird dadurch über das Bildfeld des Detektionsobjektivs bewegt.

Bei dieser Vorgehensweise muß stets sichergestellt werden, daß die Integrationszeit der Bildaufnahme größer oder gleich der Scannerperiode ist und diese möglichst mit der Scannerbewegung synchronisiert ist, um zeitliche Intensitätsmodulationen bei der Bildaufnahme zu vermeiden.

Zur Erzeugung der räumlichen Strukturierung kann zusätzlich eine gezielte zeitliche Modulation eingeführt werden, z.B. unter Verwendung eines akusto-optischen Modulators 15, so daß sich im Probenraum wiederum eine Referenzstruktur 13 aufgrund eines Gittermusters in der Intensitätsverteilung ergibt.

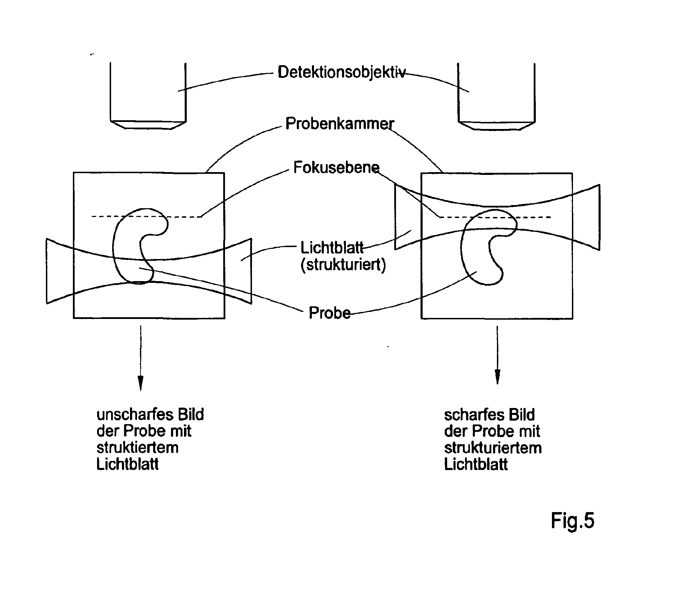

Wird mit dem strukturierten Lichtblatt die fluoreszierende Probe beleuchtet, so ist auch die von der Probe stammende Fluoreszenz räumlich moduliert. Das Gitter wird dann bei der Bildaufnahme klar sichtbar, wenn das Lichtblatt mit der Fokusebene des Detektionsobjektivs überlappt, wie dies in Fig.5 auf der rechten Seite dargestellt ist. Ist das Lichtblatt hingegen dejustiert und überlappt nicht mit der Fokusebene, so ist das Gitter so gut wie gar nicht zu erkennen, wie in Fig.5 auf der linken Seite dargestellt.

Die Gitterabbildung kann daher zur sehr genauen Justage des Lichtblattes herangezogen werden. Die Probe allein reicht hierzu nicht aus, da sie nur in Ausnahmefällen eine definierte Struktur aufweist.

Wie vorstehend ausgeführt, sind zur Justage des Lichtblattes erfindungsgemäß zwei varianten möglich, nämlich einmal anhand einer direkt erzeugten Referenzstruktur mittels Referenzobjekten und zum anderen anhand einer indirekt erzeugten Referenzstruktur in Form einer vorgegebenen Intensitätsverteilung.

Der Vorteil der Verwendung einer indirekt erzeugten Referenzstruktur gegenüber der Verwendung einer direkt erzeugten Referenzstruktur liegt darin, daß die Probe nach der Justage ungestört von jeglichen Referenzobjekten im normalen SPIM-Modus erfaßt werden kann, indem entweder das Gitter einfach aus dem Strahlengang entfernt wird oder die zeitliche Intensitätsmodulation während der Scannerbewegung abgestellt wird.

Ein Nachteil gegenüber der Verwendung von Referenzobjekten ergibt sich allerdings dadurch, daß die indirekte Strukturierung nicht zur Reduzierung der Rechenkapazität bei der 3D-Darstellung der Probe genutzt werden kann.

### Bezugszeichenliste

- 1: Probe
- 2: Kreiszylinder
- 3: Drehachse
- 4: Probenkammer
- 5: Oberseite
- 6, 7: Probenkammerwand
- 8: zum Objektraum konjugierte Ebene
- 9: Gitter
- 10: Pupillenebene
- 11: Gitterordnungen
- 12: Lichtblatt
- 13: Referenzstruktur
- 14: Scannerspiegel
- 15: akusto-optischer Modulator

- B, D: Pfeilrichtung

## Patentansprüche

1. Verfahren zur Ausrichtung des zu einem Lichtblatt geformten Beleuchtungslichtes relativ zur Fokusebene eines Mikroskopobjektivs bei der dreidimensionalen Abbildung einer Probe nach der Methode der Selective-Plane-Illumination-Microscopy (SPIM),
**dadurch gekennzeichnet, daß**
- mindestens ein aus einer fluoreszierenden Substanz bestehendes oder eine fluoreszierende Substanz aufweisendes Referenzobjekt, das eine als Referenzstruktur nutzbare Struktur aufweist, neben oder in der Probe positioniert wird, oder
- das Beleuchtungslicht mit einer Referenzstruktur in Form einer ungleichmäßigen Intensitätsverteilung beaufschlagt wird, indem das Lichtblatt durch die Bewegung eines Scannerspiegels erzeugt wird und zeitlich moduliert wird,
- aus mindestens einer vorgegebenen Detektionsrichtung
- Bilder von der Referenzstruktur des Beleuchtungslichts oder von der Referenzstruktur des Referenzobjektes aufgenommen und bezüglich der Schärfe ihrer Abbildung bewertet werden, dann
- das Lichtblatt in dieser Detektionsrichtung in die Position verschoben wird, bei der die schärfste Abbildung der Referenzstruktur in eine Beobachtungsebene erzielt wird, und/oder
- das Lichtblatt so ausgerichtet wird, dass die Referenzstruktur über das gesamte Bildfeld homogen scharf abgebildet wird.

2. Verfahren nach Anspruch 1, bei dem die Ausrichtung des Lichtblattes vorgenommen wird, indem
- das Lichtblatt durch den Probenraum in z-Richtung durchgefahren und dabei ein Bildstapel aufgenommen wird,
- eine Auswertung dieses Stapels hinsichtlich des Kontrastes der Einzelbilder vorgenommen wird,
- anhand des Kontrastes die optimale Lichtblattposition relativ zur Fokusebene des Mikroskopobjektivs bestimmt wird, und
- vermittels einer Stelleinrichtung das Lichtblatt in diese Position gebracht wird.

3. Verfahren nach einem der Ansprüche 1 oder 2, bei dem die Ausrichtung des Lichtblattes automatisch anhand des Ergebnisses der Auswertung des Kontrastes der Einzelbilder des Bildstapels vorgenommen wird.

4. Verfahren nach einem der Ansprüche 1 bis 3, bei dem als Referenzobjekt ein Gegenstand verwendet wird, bevorzugt in Form eines Stiftes, einer Nadel, einer Faser oder eines Fadens, der mindestens zu einem Teil aus fluoreszierendem Material, bevorzugt rot fluoreszierendem Material, besteht.

5. Verfahren nach einem der Ansprüche 1 bis 4, bei dem mehrere Referenzobjekte in Form von fluoreszierenden Partikeln, bevorzugt rot fluoreszierende Partikel, verwendet werden.

6. Verfahren nach Anspruch 5, bei dem mindestens drei fluoreszierende Partikel in Form kleiner mit einem Farbstoff markierter Polystyrol-Kugeln mit einem Durchmesser im Bereich von 100 nm bis 1 µm verwendet und gemeinsam mit der Probe in ein Gel, bevorzugt Agarose-Gel, eingebettet werden.

7. Verfahren nach einem der Ansprüche 1 bis 6, bei dem die Probe mit Enhanced Green Fluorescent Protein (EGFP) und damit bei Anregung grün fluoreszierend eingefärbt wird.

8. Verfahren nach einem der Ansprüche 1 bis 7, bei dem die Probe und das mindestens eine Referenzobjekt mit einer Anregungsstrahlung der Wellenlänge 488 nm beleuchtet werden.

## Claims

1. Method for aligning the illumination light shaped into a light sheet relative to the focal plane of a microscope objective in the three-dimensional image of a sample according to the method of selective plane illumination microscopy (SPIM),
**characterized in that**
- at least one reference object which consists of a fluorescent substance or has a fluorescent substance and has a structure which can be used as reference structure is positioned next to or in the sample, or
- a reference structure in the form of an irregular intensity distribution is applied to the illumination light by producing the light sheet by moving a scanner mirror and subjecting it to time modulation,
- from at least one prescribed detection direction,
- images of the reference structure of the illumination light, or of the reference structure of the reference object, are recorded and evaluated with reference to the sharpness of their imaging, after which
- the light sheet is shifted in this detection direction in the position in which the sharpest imaging of the reference structure in a plane of observation is attained, and/or
- the light sheet is aligned so that the reference structure is sharply imaged homogeneously over the entire image field.

2. Method according to Claim 1, in which the alignment of the light sheet is undertaken by
- moving the light sheet through the sample space in a z-direction and recording an image stack in the process,
- evaluating said stack with respect to the contrast of the individual images,
- determining the optimum light sheet position relative to the focal plane of the microscope objective with the aid of the contrast, and
- bringing the light sheet into said position by means of an adjusting device.

3. Method according to either of Claims 1 and 2, in which the light sheet is aligned automatically with the aid of the result of the evaluation of the contrast of the individual images of the image stack.

4. Method according to one of Claims 1 to 3, in which use is made as reference object of an object, preferably in the form of a pin, a needle, a fibre or a thread, which consists, at least in part, of fluorescing material, preferably red fluorescing material.

5. Method according to one of Claims 1 to 4, in which a plurality of reference objects in the form of fluorescing particles, preferably red fluorescing particles, are used.

6. Method according to Claim 5, in which at least three fluorescing particles in the form of small polystyrene beads marked with a dye and having a diameter in the range of 100 nm to 1 µm are used and are embedded together with the sample in a gel, preferably agarose gel.

7. Method according to one of Claims 1 to 6, in which the sample is dyed with enhanced green fluorescent protein (EGFP) and therefore fluoresces green upon excitation.

8. Method according to one of Claims 1 to 7, in which the sample and the at least one reference object are illuminated with the aid of excitation radiation of wavelength 488 nm.

## Revendications

1. Procédé d'alignement de la lumière d'éclairage façonnée en une feuille de lumière par rapport au plan focal d'un objectif de microscope lors de la représentation tridimensionnelle d'un échantillon selon le procédé de microscopie par éclairage de plan sélectif (SPIM - Selective Plane Illumination Microscopy),
**caractérisé en ce que**
- au moins un objet de référence composé d'une substance fluorescente ou présentant une substance fluorescente, lequel présente une structure pouvant être utilisée comme structure de référence, est positionné à côté ou dans l'échantillon, ou
- la lumière d'éclairage est chargée avec une structure de référence sous la forme d'une distribution irrégulière de l'intensité **en ce que** la feuille de lumière est générée par le mouvement d'un miroir de balayage et modulée dans le temps,
- depuis au moins une direction de détection prédéfinie
- des images de la structure de référence de la lumière d'éclairage ou de la structure de référence de l'objet de référence sont enregistrées et la netteté de leur représentation fait l'objet d'une évaluation, puis
- la feuille de lumière dans cette direction de détection est décalée dans la position où la représentation la plus nette de la structure de référence est obtenue dans un plan d'observation et/ou
- la feuille de lumière est alignée de telle sorte que la structure de référence est représentée avec une netteté homogène sur la totalité du champ d'image.

2. Procédé selon la revendication 1, selon lequel l'alignement de la feuille de lumière est effectué en ce que
- la feuille de lumière est déplacée dans la direction z à travers l'espace à échantillon et une pile d'images est alors enregistrée,
- une interprétation du contraste des images individuelles de cette pile est effectuée,
- la position optimale de la feuille de lumière par rapport au plan focal de l'objectif de microscope est déterminée à l'aide du contraste, et
- la feuille de lumière est amenée dans cette position au moyen d'un dispositif de positionnement.

3. Procédé selon l'une des revendications 1 ou 2, selon lequel l'alignement de la feuille de lumière est effectué automatiquement à l'aide du résultat de l'interprétation du contraste des images individuelles de la pile d'images.

4. Procédé selon l'une des revendications 1 à 3, selon lequel l'objet de référence utilisé est un objet, de préférence sous la forme d'une broche, d'une aiguille, d'une fibre ou d'un fil, lequel se compose au moins partiellement de matériau fluorescent, de préférence de matériau fluorescent rouge.

5. Procédé selon l'une des revendications 1 à 4, selon lequel sont utilisés plusieurs objets de référence sous la forme de particules fluorescentes, de préférence des particules fluorescentes rouges.

6. Procédé selon la revendication 5, selon lequel au moins trois particules fluorescentes sous la forme de petites billes en polystyrène marquées avec un colorant et ayant un diamètre dans la plage de 100 nm à 1 µm sont utilisées et enrobées conjointement avec l'échantillon dans un gel, de préférence un gel d'agarose.

7. Procédé selon l'une des revendications 1 à 6, selon lequel l'échantillon est coloré avec une protéine fluorescente verte améliorée (EGFP) et est ainsi coloré en vert fluorescent lors de l'excitation.

8. Procédé selon l'une des revendications 1 à 7, selon lequel l'échantillon et l'au moins un objet de référence sont éclairés avec un rayonnement d'excitation ayant une longueur d'onde de 488 nm.
